# EUROPEAN PATENT SPECIFICATION

(11) **EP 1 472 840 B1**
(45) Date of publication and mention of the grant of the patent: **14.05.2008**
(21) Application number: 02806570.4
(22) Date of filing: 18.12.2002
(51) Int. Cl.: H04L 25/02

(54) **TRANSMITTER OUTPUT STAGE FOR A TWO-WIRE BUS**
SENDEAUSGANGSSTUFE FÜR EINEN ZWEIDRAHTBUS
ETAGE DE SORTIE D'EMETTEUR POUR BUS A DEUX FILS

(30) Priority: 23.01.2002 DE 10202336
(43) Date of publication of application: 03.11.2004
(73) Proprietor: NXP B.V., 5656 AG Eindhoven (NL)
(72) Inventor: ELEND, Bernd, Philips Int. Prop. & Standards GmbH, 52066 Aachen (DE)
(74) Representative: Volmer, Georg
(86) International application number: PCT/IB2002/005744
(87) International publication number: WO 2003/063436

(56) References cited:
- US-A- 4 614 882
- US-A- 6 154 061

## Description

The invention relates to a transmitter output stage for a two-wire bus.

In two-wire bus systems, e.g. the CAN bus, use is made of so-called common mode chokes. These are provided separately from the transmitter output stages and the purpose they serve is to reduce the electromagnetic radiation from the bus system. This is achieved by virtue of the fact that the common mode chokes impose currents of equal size but opposite sign on the two wires of the bus system.

The common mode chokes represent an additional cost for a bus system of this kind because they have to be provided as separate pieces of circuitry.

US 6154061 discloses a CAN bus driver with symmetrical differential output signals.

It is an object of the invention to provide a transmitter output stage that itself minimizes the electromagnetic radiation from the bus by means of equal but opposed currents, thus enabling common mode chokes to be dispensed with.

This object is achieved in accordance with the invention by means of the **features of claim 1:**
- a transmitter output stage for a two-wire bus, which output stage imposes equal but opposed currents on the two wires (7, 8) of the bus and has a first voltage source (5) for supplying voltage, a second voltage or current source (6) for controlling the equal but opposed currents and for generating data bits on the bus wires (7, 8), and two first transistors (1, 2) whose bases are driven by the second voltage source (6) and which both generate equal collector currents of which one (I₁) is fed to the first bus wire (7) and a second (I_{T1}) is fed to an input of a current mirror circuit (3, 4) that, at the output end, imposes on the second bus wire (8) a current (I₂) of equal value but opposite sign to the current (I₁) fed to the first bus wire (7).

A transmitter output stage of this kind has a first voltage source that is used to supply current or voltage to the output stage. By means of a second voltage source or current source, a drive is provided for the bases of two first transistors that are so designed that they generate equal collector currents. A first one of these collector currents is fed to a first wire of the two-wire bus. The current of equal size generated by the second transistor is fed to a current mirror circuit and the latter produces, at the output end, a current of equal value but opposite sign that is fed to the second wire of the two-wire bus.

What is achieved in this way is that currents of the same magnitude but different sign are fed to the two bus wires in the desired manner, thus minimizing the electromagnetic radiation from the two wires of the bus system.

Hence, there is no longer any need for additional circuits, such as the common mode chokes known from the prior art, for example, to allow this effect to be achieved.

Rather, the transmitter output stage, under the control of the second voltage source, at all times ensures that equal but opposite currents are fed to the two wires of the bus system. This is true both when the transmitter output stage is operating off-load, i.e. when no data is being fed to the data bus, and when it is in the active mode, namely when data is being fed on. These two modes (provision may also be made for more than two modes) may be selected by selecting the value of the voltage that is supplied by the second voltage source.

Hence, what is available in the final analysis is a very simple circuit for a transmitter output stage that is suitable both for transmitting data and for minimizing the electromagnetic radiation from the two-wire bus.

Because of the different polarities of the two currents, two PNP transistors may be provided as the two first transistors that supply equal currents, as is provided for in an embodiment of the invention that is claimed in claim 2. The current mirror that supplies a current of equal magnitude but opposite sign as compared with the current fed to the first bus wire is advantageously constructed from two NPN transistors.

In a further embodiment of the invention, detailed in claim 3, the second voltage source that controls the size of the currents that are fed to the two wires of the two-wire bus may supply a plurality of voltages of different values that initiate, for example, a quiescent state for the data bus and one or more active states on the data bus.

As is provided for in a further embodiment of the invention that is claimed in claim 4, the data bus may, for example, be a CAN bus for which, because it is used in vehicles, it is particularly important for the electromagnetic radiation to be minimized.

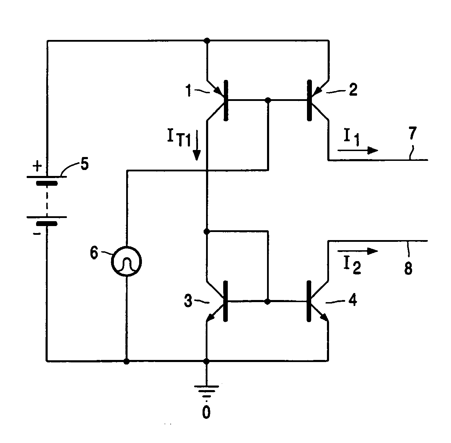

These and other aspects of the invention are apparent from and will be elucidated with reference to an embodiment described hereinafter and with reference to the sole Figure of the drawings.

The Figure shows, in the form of a circuit diagram, a transmitter output stage according to the invention having a first voltage source 5 that supplies the circuit of the transmitter output stage with voltage.

Also provided is a second voltage source 6 that drives the bases of a first PNP transistor 1 and a second PNP transistor 2. The emitters of these two PNP transistors 1 and 2 are connected to the positive pole of the first voltage source 5.

The two PNP transistors 1 and 2 are so designed that they generate collector currents of equal value. The collector current of the PNP transistor 2, which is identified in the Figure as I₁, is fed to a first bus wire 7 of a two-wire bus system that is not otherwise represented in the Figure.

The aim is to feed a current of equal value but opposite sign to a second bus wire 8 of the two-wire bus.

For this purpose, use is made of the collector current of the first PNP transistor 1, which is identified in the Figure as I_{T1} and which is of the same value and sign as the current I₁.

This current I_{T1} is fed to a current mirror circuit that is constructed from two NPN transistors 3 and 4. The emitters of the two NPN transistors 3 and 4 are connected to the negative pole of the first voltage source 5. The input transistor 3 of the current mirror circuit is connected as a diode, i.e. its base and collector are connected together. The current I_{T1} from the first PNP transistor 1 is fed to the collector of the input transistor 3 of the current mirror circuit. Hence, the output transistor 4 of the current mirror circuit generates on its collector a current of equal value but opposite sign. This current is identified in the Figure as I₂.

Hence, current I₂ is precisely the desired current that, compared with the current I₁, is of equal magnitude but opposite sign. This current is fed to the second bus wire 8.

This ensures that currents of opposite sign but equal magnitude flow on the two bus wires 7 and 8.

For its part, the voltage source 6 may be controlled, i.e. it may deliver a plurality of different voltage values that may, for example, be used to produce various states on the data bus, or rather on its bus wires 7 and 8.

Even when there are different voltage values from the voltage source 6 it is ensured, provided these values are equal to or lower than the voltage values from the first voltage source 5, that equal but opposing currents are always imposed on the bus wires 7 and 8 by the transmitter output stage, both when the latter is in a quiescent state and is not transmitting any data and when it is in an active state in which data is being fed to the two bus wires 7 and 8 of the two-wire bus.

Hence, the object stated above is achieved in any condition of operation. This is done with a relatively simple construction for the transmitter output stage and without any additional circuits being required.

The transistors at the bus end, i.e. the transistors 2 and 4, may be replicated, that is to say that more than one such transistor may be provided connected in parallel, in order to obtain a larger output current.

In place of the voltage source 6, it is also possible for a current source to be provided that feeds a current to the bases of the transistors and whose other pole is connected to the input of the current mirror circuit. The transistors 1 to 4 may also take the form of field-effect transistors.

If provision is made for the currents to be regulated by appropriately setting the voltage from the second voltage source 6, such regulation should be oriented to the voltage on the first bus wire 7, given that a desired voltage is generally preset for the first bus wire. For this purpose, provision may, for example, be made for suitable feedback of the voltage on the first bus wire 7 to the voltage source 6.

## Claims

1. A transmitter output stage for a two-wire bus, which output stage imposes equal but opposed currents on the two wires (7, 8) of the bus and has a first voltage source (5) for supplying voltage, a second voltage or current source (6) for controlling the equal but opposed currents and for generating data bits on the bus wires (7, 8), and two first transistors (1, 2) whose bases are driven by the second voltage source (6) and which both generate equal collector currents of which one (I₁) is fed to the first bus wire (7) and a second (I_{T1}) is fed to an input of a current mirror circuit (3, 4) that, at the output end, imposes on the second bus wire (8) a current (I₂) that is of equal value but opposite sign to the current (I₁) fed to the first bus wire (7).

2. A transmitter output stage as claimed in claim 1, **characterized in that** the two first transistors are in the form of PNP transistors (1, 2) and their emitters are connected to the positive pole of the first voltage source (5), **in that** a first one (1) of the two PNP transistors (1, 2) has its collector connected to the collector and the base of an NPN input transistor (3) in the current mirror circuit, which circuit has an NPN output transistor (4) whose base is connected to the base of the input transistor (3), the emitters of both the transistors (3, 4) in the current mirror circuit being connected to the negative pole of the first voltage source (5).

3. A transmitter output stage as claimed in claim 1 or 2, **characterized in that** the second voltage source (6) is able to supply a plurality of different voltage values that initiate a quiescent state for the data bus and at least one active state on the data bus.

4. A transmitter output stage as claimed in claim 1 or 2, **characterized in that** the data bus is a CAN bus and **in that** the second voltage source (6) is able to supply two different voltage values, one of which initiates a quiescent state for the data bus while the other initiates an active state on the data bus.

## Patentansprüche

1. Senderausgangsstufe für einen Doppelleitungsbus, wobei diese Ausgangsstufe gleich große, aber entgegengesetzte Ströme in die beiden Leitungen (7, 8) des Busses einspeist und Folgendes aufweist: eine erste Spannungsquelle (5) zum Zuführen von Spannung, eine zweite Spannungs- oder Stromquelle (6) zum Steuern der gleich großen, aber entgegengesetzten Ströme und zum Erzeugen von Datenbits auf den Busleitungen (7, 8), sowie zwei erste Transistoren (1, 2), deren Basiselektroden durch die zweite Spannungsquelle (6) angesteuert werden und die beide gleiche Kollektorströme erzeugen, von denen einer (I₁) in die erste Busleitung (7) eingespeist wird und ein zweiter (I_{T1}) in einen Eingang einer Stromspiegelschaltung (3, 4) eingespeist wird, die am Ausgangsende in die zweite Busleitung (8) einen Strom (I₂) einspeist, der von gleich großem Wert wie der - aber von entgegengesetztem Vorzeichen zu dem - Strom (I₁) ist, der in die erste Busleitung (7) eingespeist wird.

2. Senderausgangsstufe nach Anspruch 1, **dadurch gekennzeichnet, dass** die beiden ersten Transistoren die Form von PNP-Transistoren (1, 2) haben und ihre Emissionselektroden mit dem positiven Pol der ersten Spannungsquelle (5) verbunden sind; dass die Kollektorelektrode eines ersten (1) der beiden PNP-Transistoren (1, 2) mit der Kollektorelektrode und der Basiselektrode einen NPN-Eingangstransistors (3) in der Stromspiegelschaltung verbunden ist, wobei diese Schaltung einen NPN-Ausgangstransistor (4) aufweist, dessen Basiselektrode mit der Basiselektrode des Eingangstransistors (3) verbunden ist, wobei die Emissionselektroden beider Transistoren (3, 4) in der Stromspiegelschaltung mit dem negativen Pol der ersten Spannungsquelle (5) verbunden sind.

3. Senderausgangsstufe nach Anspruch 1 oder 2, **dadurch gekennzeichnet, dass** die zweite Spannungsquelle (6) in der Lage ist, mehrere verschiedene Spannungswerte zu liefern, die einen Ruhezustand für den Datenbus und mindestens einen aktiven Zustand auf dem Datenbus initiieren.

4. Senderausgangsstufe nach Anspruch 1 oder 2, **dadurch gekennzeichnet, dass** der Datenbus ein CAN-Bus ist und dass die zweite Spannungsquelle (6) in der Lage ist, zwei verschiedene Spannungswerte zu liefern, von denen einer einen Ruhezustand für den Datenbus Initiiert, während der andere einen aktiven Zustand auf dem Datenbus initiiert.

## Revendications

1. Étage de sortie de dispositif émetteur pour un bus à deux fils, lequel étage de sortie impose des courants égaux mais opposés sur les deux fils (7, 8) du bus et comporte une première source de tension (5) pour fournir une tension, une seconde source de tension ou de courant (6) pour commander les courants égaux mais opposés et pour générer des bits de données sur les fils de bus (7, 8), et deux premiers transistors (1, 2) dont les bases sont actionnées par la seconde source de tension (6) et qui génèrent tous les deux des courants de collecteur égaux dont un (I₁) est acheminé vers le premier fil de bus (7) et un second (I_{T1}) est acheminé vers une entrée d'un circuit à miroir de courant (3, 4) qui, au niveau de l'extrémité de sortie, impose sur le second fil de bus (8) un courant (I₂) qui est de valeur égale mais de signe opposé au courant (I₁) acheminé vers le premier fil de bus (7).

2. Étage de sortie de dispositif émetteur selon la revendication 1, **caractérisé en ce que** les deux premiers transistors se présentent sous la forme de transistors PNP (1, 2) et leurs émetteurs sont raccordés au pôle positif de la première source de tension (5), **en ce qu'**un premier (1) des deux transistors PNP (1, 2) a son collecteur raccordé au collecteur et à la base d'un transistor NPN d'entrée (3) dans le circuit à miroir de courant, lequel circuit comporte un transistor NPN de sortie (4) dont la base est raccordée à la base du transistor d'entrée (3), les émetteurs des deux transistors (3, 4) dans le circuit à miroir de courant étant raccordés au pôle négatif de la première source de tension (5).

3. Étage de sortie de dispositif émetteur selon la revendication 1 ou 2, **caractérisé en ce que** la seconde source de tension (6) est apte à fournir une pluralité de valeurs de tension différentes qui déclenchent un état de repos pour le bus de données et au moins un état actif sur le bus de données.

4. Étage de sortie de dispositif émetteur selon la revendication 1 ou 2, **caractérisé en ce que** le bus de données est un bus CAN et **en ce que** la seconde source de tension (6) est apte à fournir deux valeurs de tension différentes, dont une déclenche un état de repos pour le bus de données tandis que l'autre déclenche un état actif sur le bus de données.
